# EUROPÄISCHE PATENTSCHRIFT

(11) **EP 0 689 641 B1**
(45) Veröffentlichungstag und Bekanntmachung des Hinweises auf die Patenterteilung: **28.05.1997**
(21) Anmeldenummer: 94909003.9
(22) Anmeldetag: 18.02.1994
(51) Int. Cl.: F01N 9/00

(54) **VERFAHREN UND VORRICHTUNG ZUR FUNKTIONSÜBERWACHUNG EINES KATALYTISCHEN KONVERTERS**
PROCESS AND DEVICE FOR MONITORING THE OPERATION OF A CATALYTIC CONVERTER
PROCEDE ET DISPOSITIF DE SURVEILLANCE DU FONCTIONNEMENT D'UN CONVERTISSEUR CATALYTIQUE

(30) Priorität: 18.03.1993 DE 4308661
(43) Veröffentlichungstag der Anmeldung: 03.01.1996
(73) Patentinhaber: Emitec Gesellschaft für Emissionstechnologie mbH, 53797 Lohmar (DE)
(72) Erfinder: Maus, Wolfgang, D-51429 Bergisch Gladbach (DE); Swars, Helmut, D-51429 Bergisch Gladbach (DE); Brück, Rolf, D-51429 Bergisch Gladbach (DE)
(74) Vertreter: Kahlhöfer, Hermann, Dipl.-Phys.
(86) Internationale Anmeldenummer: EP9400477
(87) Internationale Veröffentlichungsnummer: WO9421902

(56) Entgegenhaltungen:
- WO-A-92/03643
- DE-A- 2 643 739
- GB-A- 1 373 826
- PATENT ABSTRACTS OF JAPAN vol. 16, no. 253 (M-1263)9. Juni 1992 & JP,A,04 060 106 (MAZDA MOTOR CORP) 26. Februar 1992

## Beschreibung

Die vorliegende Erfindung betrifft ein Verfahren und eine Vorrichtung zur Funktionsüberwachung eines katalytischen Konverters zur Abgasreinigung. Im Zusammenhang mit weltweit immer strenger werdenden Emissionsschutzvorschriften wird es erforderlich, die Funktion von katalytischen Konvertern bei Kraftfahrzeugen ständig oder zumindest periodisch zu überwachen, um rechtzeitig festzustellen, wenn ein katalytischer Konverter seine Funktion nicht mehr erfüllen kann.

Aus der WO 91/14 855 und der WO 92/03 643 sind verschiedene Anordnungen mit Temperaturfühlern bekannt, welche zur Überwachung von katalytischen Konvertern dienen. Auch Auswerteverfahren für die mit den Meßfühlern erzielten Meßwerte sind beschrieben.

Die bisherigen Meßkonzepte beschäftigen sich im wesentlichen mit der Funktionsüberwachung eines katalytischen Konverters, der sich auf Betriebstemperatur befindet, d. h. der eine Temperatur deutlich oberhalb der Temperatur hat, bei der die katalytische Umsetzung beginnt. Es hat sich jedoch gezeigt, daß bei strengen Abgasvorschriften für die Gesamtemission eines Kraftfahrzeuges insbesondere auch das Verhalten des katalytischen Konverters in der Kaltstartphase, d. h. beispielsweise innerhalb der ersten Minute nach dem Starten eines Verbrennungsmotors, eine entscheidende Rolle spielt. Für die Beurteilung der Funktionsfähigkeit eines katalytischen Konverters ist es auch wichtig zu wissen, wann die katalytische Umsetzung in dem katalytischen Konverter beginnt und möglicherweise auch bei welcher Temperatur.

Aufgabe der vorliegenden Erfindung ist daher die Schaffung eines Verfahrens zur Funktionsüberwachung eines katalytischen Konverters, welches auch Aussagen über das Verhalten des katalytischen Konverters in der Kaltstartphase liefert, sowie eine geeignete Vorrichtung zur Durchführung dieses Verfahrens.

Diese Aufgabe wird gelöst durch ein Verfahren zur Funktionsüberwachung eines katalytischen Konverters zur Abgasreinigung mit einer Trägerstruktur und einer auf der Trägerstruktur haftenden katalytisch aktiven Beschichtung, der dem Verbrennungsmotor eines Kraftfahrzeuges nachgeschaltet ist, mit folgenden Schritten:
a) Bestimmen der Temperatur der katalytisch aktiven Beschichtung und/oder der Struktur des katalytischen Konverters an mindestens einer Stelle,
b) Bestimmen der Temperatur des Abgases stromaufwärts vor dieser Stelle des katalytischen Konverters,
c) Bilden mindestens der ersten zeitlichen Ableitungen beider Temperaturwerte,
d) Bilden der Differenz aus den zeitlichen Ableitungen,
e) Feststellen des Zeitpunktes nach dem Start des Verbrennungsmotors, zu dem die Differenz das Vorzeichen wechselt.

Unabhängig von der Art, wie die Temperatur des Abgases und der katalytisch aktiven Beschichtung bzw. der Struktur des katalytischen Konverters bestimmt wird, liefert die Beobachtung der Differenz der zeitlichen Ableitungen dieser beiden Temperaturwerte eine genaue Aussage darüber, wann der katalytische Konverter mit der Umsetzung beginnt. Da die katalytische Umsetzung exotherm ist, heizt diese die katalytisch aktive Beschichtung und die direkt darunter liegende Struktur auf. Während der Kaltstartphase steigt zunächst die Temperatur des Abgases mehr oder weniger stetig an und heizt auch proportional dazu den katalytischen Konverter auf. Wegen der Wärmekapazität des katalytischen Konverters ändert sich die Temperatur der katalytisch aktiven Beschichtung und/oder der Struktur des katalytischen Konverters jedoch zunächst langsamer als die des Abgases. Dies ändert sich allerdings in dem Moment, wo die katalytische Umsetzung beginnt. Genau dieser Zeitpunkt kann daher mit dem erfindungsgemäßen Verfahren bestimmt werden. Durch Vergleich mit Referenzdaten oder einem neuen katalytischen Konverter kann damit auf die Funktionstüchtigkeit des katalytischen Konverters, insbesondere auf sein Kaltstartverhalten geschlossen werden.

Da in der Kaltstartphase die Betriebsweise eines Kraftfahrzeuges immer noch sehr unterschiedlich sein kann, ist die einfache Bestimmung des Zeitpunktes nach dem Start des Verbrennungsmotors, zu dem die Differenz das Vorzeichen wechselt, nicht immer aussagekräftig genug. Es ist daher besonders vorteilhaft, zu diesem Zeitpunkt die Temperatur der katalytisch aktiven Beschichtung und/oder der Trägerstruktur festzustellen, da diese Temperatur eine sehr genaue Aussage über die Funktionsfähigkeit des katalytischen Konverters ermöglicht. Diese Temperatur entspricht der sogenannten Anspringtemperatur und steigt bei einem vergifteten oder stark gealterten katalytischen Konverter von anfangs etwa 350° auf Werte von 400° bis 450° C an. In diesem Temperaturbereich sind Temperaturmessungen mit typischen Temperaturfühlern, insbesondere Widerstandsdrähten, noch sehr genau und über lange Zeiten verhältnismäßig konstant, so daß gute Aussagen über den katalytischen Konverter möglich sind.

Bei metallischen Trägerstrukturen weicht die Temperatur des Trägers wegen der geringen Wärmekapazität nur geringfügig von der der katalytisch aktiven Beschichtung ab, so daß ein in die Trägerstruktur integrierter Meßfühler praktisch auch die Temperatur der katalytisch aktiven Beschichtung mißt. Entsprechende Anordnungen für Temperaturfühler sind beispielsweise aus der DE-A-41 29 893 oder auch aus der oben zitierten WO 91/14 855 bekannt. Bei keramischen Trägerstrukturen kann es unter Umständen erforderlich sein, Temperaturfühler auf deren Oberfläche bzw. zwischen dem keramischen Träger und der katalytisch aktiven Beschichtung anzuordnen, um möglichst nahe an der Wärmequelle (dem Bereich, in dem die katalytische Reaktion abläuft) zu messen.

Für metallische Trägerstrukturen wird die Temperatur der Trägerstruktur des katalytischen Konverters erfindungsgemäß besonders vorteilhaft direkt durch mindestens einen Meßfühler gemessen, der an oder in der Trägerstruktur integriert ist. Um von ungleichmäßigen Verteilungen des Strömungsprofils und einer ungleichmäßigen katalytischen Aktivität des Konverters weitgehend unabhängig zu sein, ist es besonders vorteilhaft, integral über zumindest einen Teil des Querschnittes und/oder über zumindest einen Teil der Länge des katalytischen Konverters zu messen. So können langgestreckte Temperaturfühler, die in einem bestimmten Querschnittsbereich liegen, oder in Längsrichtung durch den katalytischen Konverter verlaufende Temperaturfühler oder auch Kombinationen aus beiden sowie diagonal durch den katalytischen Konverter verlaufende Temperaturfühler verwendet werden. Wichtig ist, daß diese Temperaturfühler hauptsächlich die Temperatur der Wärmequelle, d. h. der katalytisch aktiven Beschichtung bzw. der damit direkt in Kontakt stehenden Trägerstruktur messen und nicht hauptsächlich die Gastemperatur.

Am günstigsten für das erfindungsgemäße Verfahren wäre es, wenn gleichzeitig mit der Temperatur der katalytisch aktiven Beschichtung bzw. der Trägerstruktur die Gastemperatur ganz in der Nähe dieser Meßstelle bzw. dieses Meßbereiches bestimmt werden könnte. Dies stößt allerdings auf meßtechnische Schwierigkeiten, da eine reine Messung der Gastemperatur im Inneren eines katalytischen Konverters kaum durchführbar ist. Einerseits sind die Zwischenräume zwischen der Trägerstruktur mechanisch zu klein und zum anderen würde die Strahlung der katalytisch aktiven Beschichtung die Meßwerte der Gastemperatur möglicherweise verfälschen. Erfindungsgemäß wird daher bevorzugt die Temperatur des Abgases direkt durch mindestens einen Meßfühler im Abgasstrom zwischen dem Verbrennungsmotor und dem katalytischen Konverter gemessen. Wichtig ist jedenfalls, daß die Messung vor der Meßstelle der Temperatur der katalytisch aktiven Beschichtung bzw. der Trägerstruktur erfolgt.

Möglich ist es auch in einer anderen Variante der Erfindung, die Gastemperatur aus verschiedenen Meßwerten, die für die Steuerung des Verbrennungsmotors ohnehin gemessen werden, zu bestimmen. Insbesondere kann die Temperatur des Abgases aus der Temperatur des Verbrennungsmotors, der Drehzahl und den zugeführten Luft- und Treibstoffmengen bestimmt werden.

Wenn nach dem Beginn der katalytischen Umsetzung die Temperatur der katalytisch aktiven Beschichtung ansteigt, und die zeitliche Ableitung dieser Temperatur größer als die zeitliche Ableitung der Abgastemperatur ist, so kann auch aus der absoluten Größe der Differenz aus den beiden zeitlichen Ableitungen bei festgelegten bekannten Betriebsbedingungen auf den Zustand des katalytischen Konverters geschlossen werden, insbesondere durch Vergleich mit Sollwerten und Bestimmung der Abweichung von vorgegebenen Sollwerten.

Da im allgemeinen ein erster Teilbereich des katalytischen Konverters in der Kaltstartphase am schnellsten eine für die katalytische Reaktion notwendige Temperatur erreicht, ist es besonders vorteilhaft, die Temperatur der Trägerstruktur und/oder der katalytisch aktiven Beschichtung integral über die Länge dieses ersten Teilbereiches des katalytischen Konverters zu messen. Ganz besonders günstig ist es, wenn die Temperatur etwa repräsentativ über einen Querschnittsbereich gemessen wird, vorzugsweise über einen Querschnittsbereich innerhalb der ersten 3 bis 10 cm innerhalb der Trägerstruktur des katalytischen Konverters.

Der Vorteil der Beobachtung der zeitlichen Ableitungen liegt unter anderem darin, daß es auf die absolute Genauigkeit der Temperaturfühler nicht ankommt. Diese ist allerdings in dem hier entscheidenden Temperaturbereich bis etwa 500° C ansich noch sehr groß und nimmt erst im Bereich oberhalb von 800° C deutlich ab. Anders als bei der Überwachung eines betriebswarmen katalytischen Konverters ist daher auch die Beobachtung absoluter Temperaturen im Rahmen der vorliegenden Erfindung ein genaues Meßverfahren, insbesondere um die Anspringtemperatur des katalytischen Konverters zu ermitteln. Um hier die Genauigkeit der Temperaturfühler im katalytischen Konverter noch zu erhöhen, können diese durch Vergleich und Nachstellung gegenüber anderen Temperaturfühlern des Kraftfahrzeuges nachkalibriert werden. Ein Außentemperaturfühler oder ein Kühlwasserfühler eines Kraftfahrzeuges sind keinen hohen Temperaturen ausgesetzt und daher langzeitstabil, so daß diese eine gute Referenz zur Nachkalibrierung bieten. Wenn das Fahrzeug längere Zeit im Stillstand war, beispielsweise über Nacht, kann davon ausgegangen werden, daß sich alle Temperaturfühler auf der gleichen Temperatur befinden.

Die Erfindung betrifft zur Lösung der gestellten Aufgabe auch eine Vorrichtung zur Funktionsüberwachung eines katalytischen Konverters zur Abgasreinigung mit einer Trägerstruktur und einer auf der Trägerstruktur haftenden katalytisch aktiven Beschichtung, der dem Verbrennungsmotor eines Kraftfahrzeuges nachgeschaltet ist mit
a) mindestens einem Meßfühler zur Messung der Temperatur der Trägerstruktur und/oder der katalytisch aktiven Beschichtung,
b) mindestens einer Einrichtung zur Bestimmung der Abgastemperatur,
c) einer Differentiationsschaltung zur Bildung der zeitlichen Ableitungen der gemessenen oder bestimmten Temperaturen,
d) einer Differenzschaltung zur Bildung der Differenz aus den beiden zeitlichen Ableitungen,
e) einer Vergleichsschaltung zur Feststellung des Zeitpunktes, zu dem die Differenz das Vorzeichen wechselt.

Da die Überwachung nicht nur eine sofortige Anzeige einer Funktionsstörung des katalytischen Konverters bewirken, sondern auch in einer Fachwerkstatt eine genaue Diagnose ermöglichen soll, ist es besonders günstig, wenn eine erste Speichereinrichtung vorhanden ist, die den Temperaturmeßwert der katalytisch aktiven Beschichtung/oder der Trägerstruktur zum Zeitpunkt, zu dem die Differenz das Vorzeichen wechselt, speichert. Eine zweite Speichereinrichtung zur Speicherung von Sollwerten und/oder früher gemessenen Werten dieses Temperaturmeßwertes und eine Vergleichseinrichtung dieses Temperaturmeßwertes mit Sollwerten und/oder früher gemessenen Werten trägt zusätzlich zu einer genauen Diagnose des Zustandes des katalytischen Konverters bei und kann sogar zu einer Prognose über seine noch vorhandene Lebenserwartung dienen.

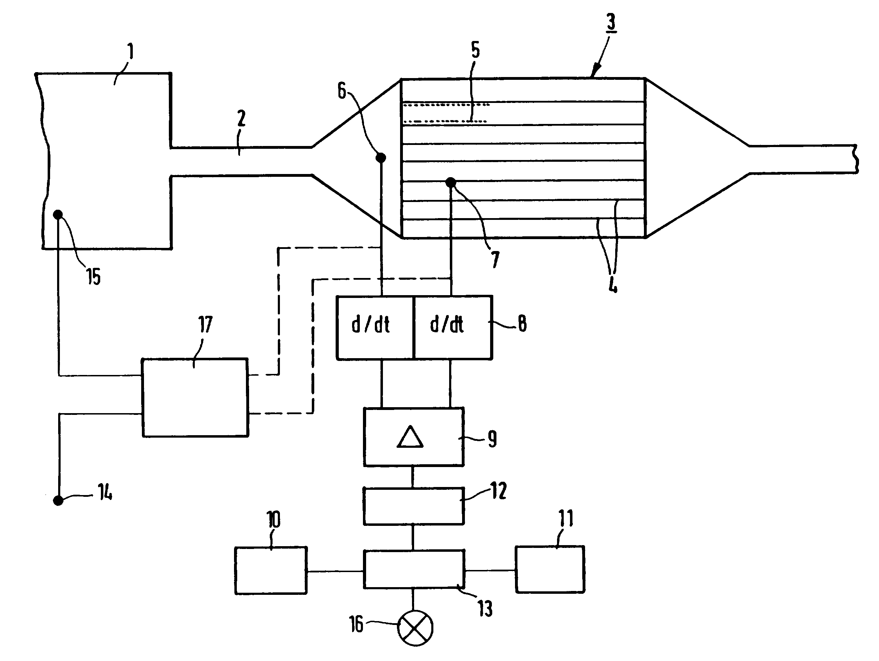

Ein Ausführungsbeispiel der Erfindung, auf das diese jedoch nicht beschränkt ist, ist schematisch in der Zeichnung dargestellt:

Von einem Motor 1 führt eine Abgasleitung 2 zu einem katalytischen Konverter 3. Dieser katalytische Konverter 3 enthält eine Trägerstruktur 4, auf der eine katalytisch aktive Beschichtung 5 haftet. Ein Temperaturfühler 6 ist so angeordnet, daß er die Temperatur Tg des Abgases möglichst nah vor einer Meßstelle 7 im katalytischen Konverter mißt, ohne von der Wärmestrahlung an dieser Stelle beeinflußt zu werden. Die Meßstelle 7 ist ein punktförmiger, vorzugsweise aber flächiger Temperaturfühler, der die Temperatur Tk der Trägerstruktur 4 mißt, die im allgemeinen sehr genau mit der Temperatur der katalytisch aktiven Beschichtung 5 übereinstimmt, wenn die Trägerstruktur metallisch ist.

Eine Differentiationsvorrichtung 8 bildet die zeitlichen Ableitungen d/dt der Meßwerte Tg, Tk aus den Temperaturfühlern 6 und 7 und eine Differenzschaltung 9 bildet die Differenz (d/dt Tk - d/dt Tg) aus diesen beiden zeitlichen Ableitungen. Eine Vergleichsschaltung 12 stellt fest, wenn sich das Vorzeichen der Differenz ändert. Stellt die Vergleichsschaltung 12 eine solche Vorzeichenänderung fest, so wird die zu diesem Zeitpunkt ti an der Meßstelle 7 gemessene Temperatur Tki in einer ersten Speichereinrichtung 10 gespeichert. In einer zweiten Speichereinrichtung 11 sind früher gemessene Temperaturmeßwerte und/oder Sollwerte gespeichert. Eine zweite Vergleichsschaltung 13 vergleicht die früher gespeicherten Werte bzw. die Sollwerte mit den in dem ersten Speicher 10 gespeicherten Temperaturwert und führt bei unerlaubten Abweichungen zu einer Anzeige 16, die auf die Fehlfunktion des katalytischen Konverters hinweist. Statt einer Anzeige oder zusätzlich kann auch ein elektronischer Speicher verwendet werden, der später zu Diagnosezwecken in einer Werkstatt ausgelesen wird.

Zur Erhöhung der Genauigkeit der Überwachungseinrichtung ist eine Nachkalibrierschaltung 17 vorgesehen, welche nach einem langen Stillstand des Kraftfahrzeuges die Temperaturmeßwerte eines Außentemperaturfühlers 14, eines Wassertemperaturfühlers 15 und der Temperaturfühler 6 und 7 miteinander vergleicht und die Fühler 6 und 7, falls nötig, nachkalibriert.

Die vorliegende Erfindung dient zur frühzeitigen Feststellung von Funktionsstörungen eines katalytischen Konverters in einem Kraftfahrzeug, wobei insbesondere auch eine Verschlechterung des Anspringverhaltens, welches für die Gesamtemission wichtig ist, festgestellt werden kann.

## Patentansprüche

1. Verfahren zur Funktionsüberwachung eines katalytischen Konverters (3) zur Abgasreinigung mit einer Trägerstruktur (4) und einer auf der Trägerstruktur (4) haftenden katalytisch aktiven Beschichtung (5), der dem Verbrennungsmotor (1) eines Kraftfahrzeuges nachgeschaltet ist mit folgenden Schritten:
a. Bestimmen der Temperatur (Tk) der katalytisch aktiven Beschichtung (5) und/oder der Struktur (4) des katalytischen Konverters (3) an mindestens einer Stelle,
b. Bestimmen der Temperatur (Tg) des Abgases stromaufwärts vor dieser Stelle des katalytischen Konverters (3),
c. Bilden mindestens der ersten zeitlichen Ableitungen beider Temperaturwerte (d/dt Tk, d/dt Tg),
d. Bilden der Differenz aus den zeitlichen Ableitungen (d/dt Tk - d/dt Tg),
e. Feststellen des Zeitpunktes (ti) nach dem Start des Verbrennungsmotors (1), zu dem die Differenz das Vorzeichen wechselt.

2. Verfahren nach Anspruch 1, wobei die Temperatur (Tki) der katalytisch aktiven Beschichtung (5) und/oder der Trägerstruktur (4) zu dem Zeitpunkt (ti), zu dem die Differenz das Vorzeichen wechselt, gemessen wird.

3. Verfahren nach Anspruch 1 oder 2, wobei die Temperatur (Tk) der Trägerstruktur (4) des katalytischen Konverters (3) direkt durch mindestens einen Meßfühler (7) gemessen wird, der an oder in der Trägerstruktur (4) des katalytischen Konverters (3) integriert ist, vorzugsweise einen integral über zumindest einen Teil des Querschnittes und/oder über zumindest einen Teil der Länge des katalytischen Konverters (3) messenden Meßfühler.

4. Verfahren nach Anspruch 1, 2 oder 3, wobei die Temperatur (Tg) des Abgases direkt durch mindestens einen Meßfühler (6) im Abgasstrom zwischen dem Verbrennungsmotor (1) und dem katalytischen Konverter (3) gemessen wird.

5. Verfahren nach Anspruch 1, 2 oder 3, wobei die Temperatur (Tg) des Abgases aus verschiedenen Meßwerten, die für die Steuerung des Verbrennungsmotors (1) ohnehin gemessen werden, bestimmt wird.

6. Verfahren nach Anspruch 5, wobei die Temperatur (Tg) des Abgases aus der Temperatur des Verbrennungsmotors (1), der Drehzahl und den zugeführten Luft- und Treibstoffmengen bestimmt wird.

7. Verfahren nach einem der vorhergehenden Ansprüche, wobei zusätzlich die absolute Größe der Differenz aus den zeitlichen Ableitungen bei festgelegten bekannten Betriebsbedingungen bestimmt und auf Abweichungen von Sollwerten überwacht wird.

8. Verfahren nach einem der vorhergehenden Ansprüche, wobei die Temperatur (Tk) der Trägerstruktur (4) und/oder der katalytisch aktiven Beschichtung (5) des katalytischen Konverters (3) integral über die Länge eines ersten Teilbereiches des katalytischen Konverters (3) gemessen wird.

9. Verfahren nach einem der vorhergehenden Ansprüche, wobei die Temperatur (Tk) etwa repräsentativ über einen Querschnittsbereich des katalytischen Konverters (3) gemessen wird, vorzugsweise über einen Querschnittsbereich innerhalb der ersten 3 bis 10 cm innerhalb der Trägerstruktur (4) des katalytischen Konverters (3).

10. Verfahren nach einem der Ansprüche 3 bis 9, wobei der oder die Meßfühler (6, 7) von Zeit zu Zeit nach einem längeren Stillstand des Verbrennungsmotors (1) rekalibriert werden, insbesondere durch Vergleich mit einem Außentemperaturfühler (14) oder einem Kühlwasserfühler (15) des Kraftfahrzeuges und entsprechender Nachkalibrierung.

11. Vorrichtung zur Funktionsüberwachung eines katalytischen Konverters (3) zur Abgasreinigung mit einer Trägerstruktur (4) und einer auf der Trägerstruktur (4) haftenden katalytisch aktiven Beschichtung (5), der dem Verbrennungsmotor (1) eines Kraftfahrzeuges nachgeschaltet ist, mit
a. mindestens einem Meßfühler (7) zur Messung der Temperatur (Tk) der Trägerstruktur (4) und/oder der katalytisch aktiven Beschichtung (5),
b. mindestens einer Einrichtung (6) zur Bestimmung der Abgastemperatur (Tg),
c. einer Differentiationsschaltung (8) zur Bildung der zeitlichen Ableitungen (d/dt Tk, d/dt Tg) der gemessenen oder bestimmten Temperaturen (Tk, Tg),
d. einer Differenzschaltung (9) zur Bildung der Differenz (d/dt Tk - d/dt Tg) aus den beiden zeitlichen Ableitungen (d/dt Tk, d/dt Tg),
e. einer ersten Vergleichsschaltung (12) zur Feststellung des Zeitpunktes (ti), zu dem die Differenz (d/dt Tk - d/dt Tg) das Vorzeichen wechselt.

12. Vorrichtung nach Anspruch 11, wobei eine erste Speichereinrichtung (10) vorhanden ist, zur Speicherung des Temperaturmeßwertes (Tki) der katalytisch aktiven Beschichtung (5) und/oder der Trägerstruktur (4) zum Zeitpunkt (ti), zu dem die Differenz (d/dt Tk - d/dt Tg) das Vorzeichen wechselt.

13. Vorrichtung nach Anspruch 11 oder 12, wobei eine zweite Speichereinrichtung (11) vorhanden ist zur Speicherung von Sollwerten und/-oder früher gemessenen Werten des Temperaturmeßwertes (Tki) zum Zeitpunkt (ti), zu dem die Differenz (d/dt Tk - d/dt Tg) das Vorzeichen wechselt, und eine zweite Vergleichseinrichtung (13) zum Vergleich des Temperaturmeßwertes (Tki) zum Zeitpunkt (ti), bei dem die Differenz (d/dt Tk - d/dt Tg) das Vorzeichen wechselt, mit den Sollwerten und/oder früher gemessenen Werten.

## Claims

1. A process for monitoring the operation of a catalytic converter (3) for exhaust gas purification comprising a carrier structure (4) and a catalytically active coating (5) which adheres to the carrier structure (4), which catalytic converter is connected downstream of the internal combustion engine (1) of a motor vehicle, comprising the following steps:
a) determining the temperature (Tk) of the catalytically active coating (5) and/or the structure (4) of the catalytic converter (3) at at least one location,
b) determining the temperature (Tg) of the exhaust gas upstream of said location of the catalytic converter (3),
c) forming at least the first derivatives in respect of time of both temperature values (d/dt Tk, d/dt Tg),
d) forming the difference between the derivatives in respect of time (d/dt Tk - d/dt Tg), and
e) ascertaining the time (ti) after starting of the internal combustion engine (1), at which the difference changes in sign.

2. A process according to claim 1 wherein the temperature (Tki) of the catalytically active coating (5) and/or the carrier structure (4) is measured at the time (ti) at which the difference changes in sign.

3. A process according to claim 1 or claim 2 wherein the temperature (Tk) of the carrier structure (4) of the catalytic converter (3) is measured directly by at least one measuring sensor (7) which is integrated on or in the carrier structure (4) of the catalytic converter (3), preferably a measuring sensor which measures integrally over at least a part of the cross-section and/or ever at least a part of the length of the catalytic converter (3).

4. A process according to claim 1, claim 2 or claim 3 wherein the temperature (Tg) of the exhaust gas is measured directly by at least one measuring sensor (6) in the exhaust gas flow between the internal combustion engine (1) and the catalytic converter (3).

5. A process according to claim 1, claim 2 or claim 3 wherein the temperature (Tg) of the exhaust gas is determined from various measurement values which are measured in any case for control of the internal combustion engine (1).

6. A process according to claim 5 wherein the temperature (Tg) of the exhaust gas is determined from the temperature of the internal combustion engine (1), the speed of rotation and the supplied amounts of air and fuel.

7. A process according to one of the preceding claims wherein in addition the absolute magnitude of the difference between the derivatives in respect of time is determined under fixed known operating conditions and is monitored for deviations from reference values.

8. A process according to one of the preceding claims wherein the temperature (Tk) of the carrier structure (4) and/or the catalytically active coating (5) of the catalytic converter (3) is measured integrally over the length of a first portion of the catalytic converter (3).

9. A process according to one of the preceding claims wherein the temperature (Tk) is measured approximately representatively over a cross-sectional region of the catalytic converter (3), preferably over a cross-sectional region within the first 3 to 10 cm within the carrier structure (4) of the catalytic converter (3).

10. A process according to one of claims 3 to 9 wherein the measuring sensor or sensors (6, 7) are recalibrated from time to time after a prolonged stoppage of the internal combustion engine (1), in particularly by comparison with an external temperature sensor (14) or a cooling water sensor (15) of the motor vehicle and suitable adjustment calibration.

11. Apparatus for monitoring the operation of a catalytic converter (3) for exhaust gas purification comprising a carrier structure (4) and a catalytically active coating (5) which adheres to the carrier structure (4), which catalytic converter is connected downstream of the internal combustion engine (1) of a motor vehicle, comprising:
a) at least one measuring sensor (7) for measuring the temperature (Tk) of the carrier structure (4) and/or the catalytically active coating (5),
b) at least one device (6) for determining the exhaust gas temperature (Tg),
c) a differentiation circuit (8) for forming the derivatives in respect of time (d/dt Tk, d/dt Tg) of the measured or determined temperatures (Tk, Tg),
d) a differencing circuit (9) for forming the difference (d/dt Tk - d/dt Tg) between the two derivatives in respect of time (d/dt Tk, d/dt Tg), and
e) a first comparison circuit (12) for ascertaining the time (ti) at which the difference (d/dt Tk - d/dt Tg) changes in sign.

12. Apparatus according to claim 11 wherein there is a first storage means (10) for storage of the temperature measurement value (Tki) of the catalytically active coating (5) and/or the carrier structure (4) at the time (ti) at which the difference (d/dt Tk - d/dt Tg) changes in sign.

13. Apparatus according to claim 11 or claim 12 wherein there is a second storage means (11) for storage of reference values and/or earlier measured values of the temperature measurement value (Tki) at the time (ti) at which the difference (d/dt Tk - d/dt Tg) changes in sign, and a second comparison means (13) for comparison of the temperature measurement value (Tki) at the time (ti) at which the difference (d/dt Tk - d/dt Tg) changes in sign to the reference values and/or earlier measured values.

## Revendications

1. Procédé de contrôle du fonctionnement d'un convertisseur catalytique (3), destiné à l'épuration de gaz d'échappement, qui comporte une structure (4) formant support et une couche (5) active de façon catalytique adhérant à la structure (4) formant support et qui est placé en aval du moteur thermique (1) d'un véhicule automobile, comprenant les étapes suivantes :
a. Détermination de la température (Tk) de la couche (5) active de façon catalytique et/ou de la structure (4) du convertisseur catalytique (3) en au moins un endroit,
b. Détermination de la température (Tg) du gaz d'échappement en amont de cet endroit du convertisseur catalytique (3),
c. Formation d'au moins les premières dérivées par rapport au temps des deux valeurs de température (d/dt Tk, d/dt Tg),
d. Formation de la différence des dérivées par rapport au temps (d/dt Tk - d/dt Tg),
e. Détermination de l'instant (ti), après le démarrage du moteur thermique (1), auquel la différence change de signe.

2. Procédé selon la revendication 1, dans lequel on mesure la température (Tki) de la couche (5) active de façon catalytique et/ou de la structure (4) formant support à l'instant (ti) auquel la différence change de signe.

3. Procédé selon la revendication 1 ou 2, dans lequel on mesure la température (Tk) de la structure (4) formant support du convertisseur catalytique (3) directement au moyen d'au moins un capteur (7), qui est intégré sur ou dans la structure (4) formant support du convertisseur catalytique (3), de préférence un capteur mesurant comme une intégrale sur au moins une partie de la section et/ou sur au moins une partie de la longueur du convertisseur catalytique (3).

4. Procédé selon la revendication 1, 2 ou 3, dans lequel on mesure la température (Tg) du gaz d'échappement directement au moyen d'au moins un capteur (6) placé dans le courant de gaz d'échappement entre le moteur thermique (1) et le convertisseur catalytique (3).

5. Procédé selon la revendication 1, 2 ou 3, dans lequel on détermine la température (Tg) du gaz d'échappement à partir de différentes valeurs mesurées qui ont été mesurées de toute façon pour la commande du moteur thermique (1).

6. Procédé selon la revendication 5, dans lequel on détermine la température (Tg) du gaz d'échappement à partir de la température du moteur thermique (1), de la vitesse de rotation et des quantités d'air et de carburant amenées.

7. Procédé selon l'une des revendications précédentes, dans lequel on détermine de plus la valeur absolue de la différence des dérivées par rapport au temps pour des conditions de fonctionnement fixées connues et dans lequel on contrôle les écarts entre ces valeurs et des valeurs de consigne.

8. Procédé selon l'une des revendications précédentes, dans lequel on mesure la température (Tk) de la structure (4) formant support et/ou de la couche (5) active de façon catalytique du convertisseur catalytique (3), comme une intégrale sur toute la longueur d'une première zone partielle du convertisseur catalytique (3).

9. Procédé selon l'une des revendications précédentes, dans lequel on mesure la température (Tk) à peu près de façon représentative sur une zone de section du convertisseur catalytique (3), de préférence sur une zone de section à l'intérieur des 3 à 10 premiers centimètres à l'intérieur de la structure (4) formant support du convertisseur catalytique (3).

10. Procédé selon l'une des revendications 3 à 9, dans lequel on ré-étalonne de temps en temps le ou les capteurs (6, 7) après un long arrêt du moteur thermique (1), en particulier par une comparaison avec un capteur de température extérieure (14) ou avec un capteur d'eau de refroidissement (15) du véhicule et par un étalonnage correspondant ultérieur.

11. Dispositif de contrôle du fonctionnement d'un convertisseur catalytique (3), destiné à l'épuration de gaz d'échappement, qui comporte une structure (4) formant support et une couche (5) active de façon catalytique adhérant à la structure (4) formant support et qui est placé en aval du moteur thermique (1) d'un véhicule automobile, avec
a. au moins un capteur (7) pour la mesure de la température (Tk) de la structure (4) formant support et/ou de la couche (5) active de façon catalytique,
b. au moins un dispositif (6) pour la détermination de la température (Tg) du gaz d'échappement,
c. un circuit de formation de dérivée (8) pour former les dérivées par rapport au temps (d/dt Tk, d/dt Tg) des températures (Tk, Tg) mesurées ou déterminées,
d. un circuit de formation de différence (9) pour former la différence (d/dt Tk - d/dt Tg) à partir des deux dérivées par rapport au temps (d/dt Tk, d/dt Tg),
e. un premier circuit comparateur (12) pour déterminer l'instant (ti) auquel la différence (d/dt Tk - d/dt Tg) change de signe.

12. Dispositif selon la revendication 11, dans lequel se trouve un premier dispositif de mémorisation (10) pour mémoriser la valeur mesurée de température (Tki) de la couche (5) active de façon catalytique et/ou de la structure (4) formant support à l'instant (ti) auquel la différence (d/dt Tk - d/dt Tg) change de signe.

13. Dispositif selon la revendication 11 ou 12, dans lequel se trouve un second dispositif de mémorisation (11) pour mémoriser des valeurs de consigne et/ou des valeurs mesurées auparavant de la valeur mesurée de température (Tki) à l'instant (ti) auquel la différence (d/dt Tk - d/dt Tg) change de signe, et dans lequel se trouve un second dispositif comparateur (13) pour comparer la valeur mesurée de température (Tki) à l'instant (ti) auquel la différence (d/dt Tk - d/dt Tg) change de signe avec les valeurs de consigne et/ou des valeurs mesurées auparavant.
